(19) Europäisches Patentamt / European Patent Office / Office européen des brevets

(11) **EP 3 754 556 A1**

(12) **EUROPEAN PATENT APPLICATION**

(43) Date of publication:
23.12.2020 Bulletin 2020/52

(51) Int Cl.:
*G06N 3/00* (2006.01)  *G06N 7/00* (2006.01)

(21) Application number: 20177455.1

(22) Date of filing: 29.05.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 18.06.2019 JP 2019112548

(71) Applicant: FUJITSU CONNECTED TECHNOLOGIES LIMITED
Kanagawa 211-8588 (JP)

(72) Inventor: TAMURA, Hirotaka
Kawasaki-shi, Kanagawa 211-8588 (JP)

(74) Representative: Haseltine Lake Kempner LLP
138 Cheapside
London EC2V 6BJ (GB)

(54) **SAMPLING DEVICE AND SAMPLING METHOD**

(57) A sampling device includes: a plurality of update circuits including a storage unit that stores a coupling coefficient for each set of a state variable that is a change candidate and another state variable among a plurality of state variables included in an evaluation function indicating an energy value, values of the plurality of state variables, and values of a plurality of local fields corresponding to the plurality of state variables, a state update unit that calculates a change value of the energy value on the basis of the value of the local field of the state variable that is the change candidate, changes the value of the state variable according to determination whether or not the value of the state variable is changed depending on a set temperature value and random value and the change value, and updates the value of the local field of the other state variable on the basis of the coupling coefficient, and a score update unit that updates a score value according to the energy value with respect to the values of the plurality of state variables and the temperature value; and a selection circuit configured to select a set of the values of the plurality of state variables held by a predetermined number of update circuits fewer than the number of the plurality of update circuits, on the basis of the plurality of score values corresponding to the plurality of update circuits and output the selected set of the values of the plurality of state variables.

FIG. 1

**Description**

FIELD

The embodiments discussed herein are related to a sampling device and a sampling method.

BACKGROUND

As a method for solving a combination optimization problem, there is a method for converting the combination optimization problem into the Ising model indicating a spin behavior of a magnetic material and transitioning a state of the Ising model to a state with low energy by using the Markov chain Monte Carlo method. For example, as a kind of the Markov chain Monte Carlo method, the simulated annealing method is known. In the simulated annealing method, a state with the lowest energy (optimum solution) is searched by using a temperature as a parameter and transitioning a state while gradually lowering the temperature.

For example, an information processing device that performs the simulated annealing method by using a digital circuit has been proposed (for example, refer to Patent Document 1). The proposed information processing device performs parallel search for selecting a single state transition by simultaneously setting a plurality of state transitions as transition candidates as follows.

The information processing device includes a plurality of neurons corresponding to a plurality of state variables and allows each state transition with a predetermined acceptance probability on the basis of an energy change and a temperature value for each state transition according to a coupling coefficient between the neurons. The information processing device selects one state transition from among the allowed state transitions and updates the state. As the acceptance probability of the state transition, for example, a probability defined by the Metropolis method and the Gibbs method is used.

Furthermore, an information processing system is also proposed in which one or a plurality of semiconductor chips that performs ground state search of the Ising model is mounted (for example, refer to Patent Document 2).

Moreover, a semiconductor device is proposed that includes an arithmetic circuit that determines a value indicating a next state of one node on the basis of a value indicating a state of the one node of an interaction model, an interaction coefficient from another node, and a bias coefficient of the one node (for example, refer to Patent Document 3).

Japanese Laid-open Patent Publication No. 2018-41351, Japanese Laid-open Patent Publication No. 2016-51350, and Japanese Laid-open Patent Publication No. 2016-51326 are disclosed as related art.

When an acceptance probability of a state transition is determined by the Metropolis method and the Gibbs method, an occupancy probability in each state is according to the Boltzmann distribution in an equilibrium state. Therefore, by outputting a state obtained by a plurality of trials of a state transition at a certain temperature and a value based on the state as a sample by using the Markov chain Monte Carlo method, a sampler that generates a sample according to the Boltzmann distribution can be implemented. The generated sample is used to calculate an expected value, for example, by machine learning or the like.

Here, as in the information processing device described above, it is considered to perform sampling by determining the next state transition by parallel search on a plurality of state variables. In this method, a state variable to be inverted next is unpredictable (substantially random). At the timing when a local field is updated according to the state variable to be inverted, random access to a memory holding a value of a coupling coefficient occurs. Therefore, for a high-speed operation, it is considered that a storage unit that can be randomly accessed is built in the sampler and all coupling coefficients are stored in the storage unit in advance.

On the other hand, as the number of state variables increases, the number of coupling coefficients increases. Therefore, for example, in a case where the sampler is implemented by a semiconductor integrated circuit including one or a plurality of chips, there is a problem in that the number of state variables that can be used is limited depending on a capacity of the storage unit that stores the coupling coefficients.

It is desirable to provide a sampling device and a sampling method capable of improving limitation in the number of state variables that can be used.

SUMMARY

According to an embodiment of an aspect, a sampling device includes: a plurality of update circuits including a storage unit that stores a coupling coefficient for each set of a state variable that is a change candidate and another state variable among a plurality of state variables included in an evaluation function indicating an energy value, values of the plurality of state variables, and values of a plurality of local fields corresponding to the plurality of state variables, a state update unit that calculates a change value of the energy value on the basis of the value of the local field of the state variable that is the change candidate, changes the value of the state variable according to determination whether or not the value of the state variable is changed depending on a set temperature value and random value and the change value, and updates the value of the local field of the other state variable on the basis of the coupling coefficient, and a score update unit that updates a score value according to the energy value with respect to the values of the plurality of state variables and the temperature value; and a selection circuit configured to select a set of the values of the plurality of state variables held by a predetermined number of update circuits fewer than the number of the plurality of update circuits, on the basis of the plurality of score values corresponding to the plurality of update circuits and output the selected set of the values of the plurality of state variables.

In an embodiment of one aspect, limitation in the number of state variables that can be used may be improved.

BRIEF DESCRIPTION OF DRAWINGS

FIG. 1 is a diagram illustrating a sampling device according to a first embodiment;
FIG. 2 is a diagram illustrating an exemplary circuit configuration of a sampling device according to a second embodiment;
FIG. 3 is a diagram illustrating an exemplary circuit configuration of a replica update circuit;
FIG. 4 is a diagram illustrating an exemplary circuit configuration of a determination unit;
FIG. 5 is a diagram illustrating an exemplary circuit configuration of a resampling circuit;
FIG. 6 is a diagram illustrating an exemplary circuit configuration of a selection circuit;
FIG. 7 is a flowchart illustrating a processing example of the sampling device;
FIG. 8 is a flowchart illustrating an example of resampling;
FIG. 9 is a diagram illustrating an exemplary circuit configuration of a sampling device according to a third embodiment;
FIG. 10 is a diagram illustrating an exemplary circuit configuration of a score order selection circuit;
FIG. 11 is a diagram illustrating an exemplary circuit configuration of the selection circuit;
FIG. 12 is a flowchart illustrating a processing example of the sampling device;
FIG. 13 is a diagram illustrating a division example of a state variable; and
FIG. 14 is a diagram illustrating an exemplary circuit configuration of a sampling device according to a fourth embodiment.

DESCRIPTION OF EMBODIMENTS

Hereinafter, the present embodiment will be described, by way of example only, with reference to the drawings.

[First Embodiment]

A first embodiment will be described.

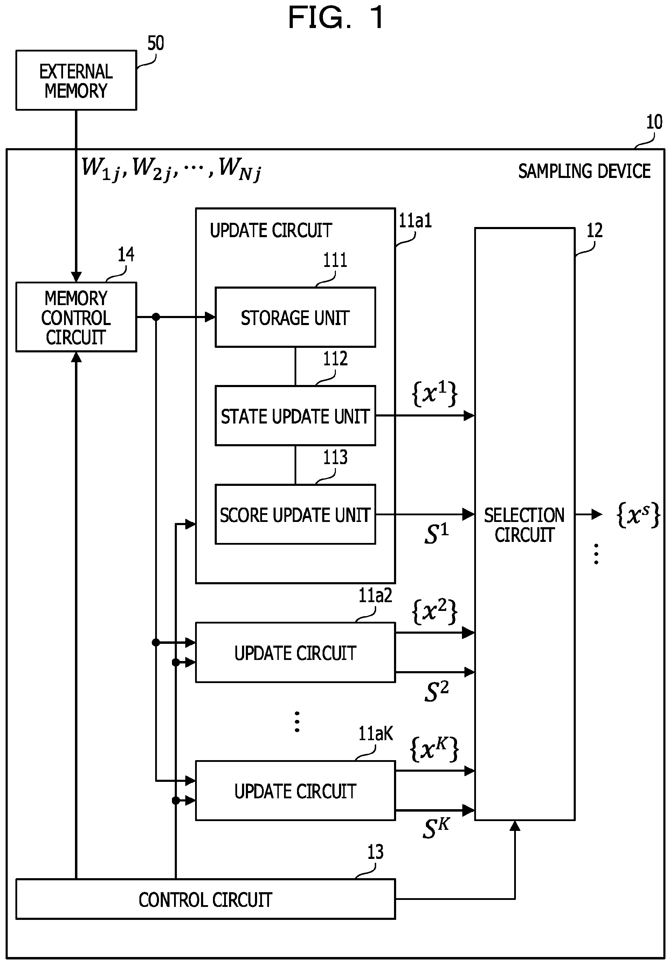

FIG. 1 is a diagram illustrating a sampling device according to the first embodiment. A sampling device 10 performs sampling of a state according to the Boltzmann distribution by transitioning a state of the Ising model by using the references of the Metropolis method and the Gibbs method, by using the Markov-Chain MonteCarlo (MCMC) method. The sampling device 10 can solve a combination optimization problem. The sampling device 10 is implemented by using a semiconductor integrated circuit (semiconductor chip), for example, a Field Programmable Gate Array (FPGA) or the like.

Here, an Ising-type energy function E(x) is defined by, for example, the expression (1).
[Formula 1]

$$E(\boldsymbol{x}) = -\sum_{\langle i,j \rangle} W_{ij} x_i x_j - \sum_i b_i x_i \qquad (1)$$

A first term on the right side of the expression (1) is obtained by integrating products of values of two state variables with a coupling coefficient without omission and duplication for all combinations of the two state variables that can be selected from all the state variables. The reference $x_i$ indicates an i-th state variable. The reference $x_j$ indicates a j-th state variable. The state variable is a value of zero or one. There is a case where the state variable is referred to as a binary variable, a bit, or the like. The coupling coefficient $W_{ij}$ indicates a weight between the i-th state variable and the j-th state variable (for example, coupling strength). Note that, regarding a matrix $W = \{W_{ij}\}$, $W_{ij} = W_{ji}$ and $W_{ii} = 0$ are

satisfied. The subscripts i and j are identification information of state variables, and are referred to as indexes. The coupling coefficients for all the combinations of the state variables are stored in an external memory 50 connected to the sampling device 10. The external memory 50 is implemented by, for example, a Dynamic Random Access Memory (DRAM) .

A second term on the right side of the expression (1) is a sum of products of bias values of each of all the state variables and the value of the state variable. The reference bi indicates a bias value for the i-th state variable.

For example, "- 1" of a spin in the Ising model corresponds to a value "0" of the state variable. A value "+ 1" of the spin in the Ising model corresponds to a value "1" of the state variable.

When the value of the state variable $x_i$ changes to 1 - $x_i$, an increment of the state variable $x_i$ can be expressed as $\delta x_i$ = (1 - $x_i$) - $x_i$ = 1 - 2$x_i$. Therefore, with respect to the energy function E(x), an energy change $\Delta E_i$ accompanying a spin flip (change in value) of the state variable $x_i$ is expressed by the expression (2).

[Formula 2]

$$\Delta E_i = E(\boldsymbol{x})\Big|_{x_i \to 1-x_i} - E(\boldsymbol{x})$$
$$= -\delta x_i \left( \sum_j W_{ij} x_j + b_i \right)$$
$$= -\delta x_i h_i$$
$$= \begin{cases} -h_i & for \ x_i = 0 \to 1 \\ +h_i & for \ x_i = 1 \to 0 \end{cases} \tag{2}$$

The reference $h_i$ is referred to as a local field (local field) and is expressed by the expression (3).

[Formula 3]

$$h_i = \sum_j W_{ij} x_j + b_i \tag{3}$$

A change $\delta h_i^{(j)}$ of the local field $h_i$ when the state variable $x_j$ changes (bit flip) is expressed by the expression (4) .

[Formula 4]

$$\delta h_i^{(j)} = \begin{cases} +W_{ij} & for \ x_j = 0 \to 1 \\ -W_{ij} & for \ x_j = 1 \to 0 \end{cases} \tag{4}$$

The sampling device 10 holds the local field $h_i$ with respect to the state variable $x_i$ and adds the change $\delta h_i^{(j)}$ to $h_i$ when a value of other state variable $x_j$ changes so as to obtain $h_i$ corresponding to the state after the bit flip. The sampling device 10 can obtain the energy change value $\Delta E_i$ when the state variable $x_i$ is set to a change candidate according to the local field $h_i$ on the basis of the expression (2).

As described above, the sampling device 10 uses the Metropolis method and the Gibbs method to determine whether or not to allow a state transition in which the energy change is $\Delta E_i$ (change in value of state variable $x_i$). With this operation, in neighbor search for searching a transition from a certain state to another state in which energy is lower than that in the state, a transition to not only a state where energy is decreased but also a state where energy is increased is stochastically allowed. For example, a probability (acceptance probability) A for accepting the change in the value of the state variable of the energy change $\Delta E$ is expressed by the expression (5).

[Formula 5]

$$A(\Delta E) = \begin{cases} \min\left[1, \exp(-\beta \cdot \Delta E)\right] & Metropolis \\ 1/\left[1 + \exp\left(\beta \cdot \Delta E\right)\right] & Gibbs \end{cases} \quad (5)$$

Here, a reference $\beta$ is a reciprocal (inverse temperature value) of a temperature value T, and $\beta = 1/T$ is satisfied. A min operator indicates that a minimum value of arguments is set. For example, in a case where the Metropolis method is used, the sampling device 10 allows a change in the value of the state variable in a case where the energy change $\Delta E$ satisfies the expression (6) with respect to a uniform random number u ($0 < u \le 1$).
[Formula 6]

$$\frac{\ln(u)}{\beta} \le -\Delta E \quad (6)$$

The sampling device 10 changes a value of the state variable of which the change is allowed and updates a local field of the other state variable according to the coupling coefficient between the state variables so as to transition the state.
The sampling device 10 includes a plurality of replicas corresponding to the plurality of state variables, and operates the above described stochastic search processes in parallel. As a method for integrating information regarding the plurality of replicas, the sampling device 10 uses Annealed Importance Sampling (abbreviated as AIS) that is an application of the principle of Jarzynski-Neal or a method of Population Annealing (abbreviated as PA).
The document 1 can be referred regarding the principle of Jarzynski-Neal. The document 2 can be referred regarding the AIS. The document 3 can be referred regarding the PA.

Document 1: Jarzynski, C., "Equilibrium Free Energies from Nonequilibrium Processes" Acta Phys. Pol. B, vol.29(6), p.1609-1622., 1998
Document 2: Neal, R. M., "Annealed Importance Sampling" Statistics and Computing, volume 11 Issue2, p.125-139., 2001
Document 3: K. Hukushimaand Y. Iba, "Population annealing and its application to a spin glass" AIP Conference Proceedings, vol.690, p.200-206., 2003

Here, the number of state variables belonging to a single replica is set to N (N is integer equal to or more than two). In this case, the total number of coupling coefficients held by the external memory 50 is $N^2$. Furthermore, the number of replicas included in the sampling device 10 is set to K (K is integer equal to or more than two). Moreover, a state of the replica is expressed as a state vector $\{x_p{}^k\}$ (k is integer equal to or more than one and equal to or less than K). Note that a subscript p of the state vector is an integer equal to or more than zero and indicates a time step. A superscript k of the state vector indicates a replica. There is a case where the subscripts p and k are omitted. The state vector $\{x_p{}^k\}$ is expressed by the expression (7) (subscript t indicates transposition).
[Formula 7]

$$x_p^k = {}^t\!\left(x_{p1}^k, x_{p2}^k, \cdots, x_{pN}^k\right) \quad (7)$$

The sampling device 10 gives a score $S^k$ indicating a weight of the replica to each replica. The sampling device 10 updates the state of the replica from a random initial state $x_0{}^k$ to $x_1{}^k$, $x_2{}^k$,... by using the MCMC method as assuming that the score $S_0{}^k = 1$. The score $S_p{}^k$ is expressed by the expression (8).
[Formula 8]

$$S_p^k = S_{p-1}^k \exp\left(-(\beta_p - \beta_{p-1})E(x_p^k)\right) \quad (8)$$

Here, an initial value of an inverse temperature $\beta_p$ is $\beta_0 = 0$, and an initial value of the score $S_p{}^k$ is $S_0{}^k = 1$. When the sampling device 10 updates a state $x_p{}^k$ by the MCMC method a predetermined number of times (for example, N times in total per trial for each of all state variables) at the inverse temperature $\beta_p$, the inverse temperature is updated by the expression (9) as assuming that p = p + 1, and the score $S_p^k$ is obtained. The inverse temperature geometrically increases depending on a coefficient $\alpha$ (> 1). By repeating the above procedure, the score $S_p^k$ of each replica is updated.
[Formula 9]

$$\beta_p = \alpha\beta_{p-1} \quad (\alpha > 1) \qquad\qquad (9)$$

The sampling device 10 performs sampling on the basis of the score $S_p^k$.
The sampling device 10 includes update circuits 11a1, 11a2,..., and 11aK, a selection circuit 12, a control circuit 13, and a memory control circuit 14.
Each of the update circuits 11a1 to 11aK corresponds to the replica of the Ising model and executes the stochastic search process of each replica. In FIG. 1, a configuration of the update circuit 11a1 is illustrated. The update circuits 11a2 to 11aK have similar configurations to the update circuit 11a1. The update circuit 11a1 includes a storage unit 111, a state update unit 112, and a score update unit 113. For example, the update circuit 11a1 corresponds to a replica of which k = 1 (subscripts p and k are omitted) . Furthermore, an index of the state variable that is the change candidate (or index of change candidate) is set to j.
The storage unit 111 stores a coupling coefficient $\{W_{ij}\}$ ($W_{jj} = 0$ may be included) for each set of the state variable $x_j$ that is the change candidate and the other state variable $\{x_i\}$ among the plurality of state variables ($x_1$ to $x_N$) included in an evaluation function indicating an energy value. Furthermore, the storage unit 111 stores values of the plurality of state variables and values of a plurality of local fields ($h_1$ to $h_N$) corresponding to the plurality of state variables. The storage unit 111 is implemented by, for example, a Static Random Access Memory (SRAM) . The index j of the change candidate at this time is a single index common to the update circuits 11a1 to 11aK. The index j of the change candidate is selected by the state update unit 112 or the like in a predetermined order (for example, in order of index).
The state update unit 112 calculates a change value $\Delta E_j$ of the energy value on the basis of the value of the local field $h_j$ of the state variable $x_j$ that is the change candidate according to the expression (2). The state update unit 112 changes the value of the state variable in accordance with the determination whether or not to change the value of the state variable $x_j$ on the basis of the set temperature value T, the random value u, and the change value $\Delta E_j$ and updates a value of a local field $\{h_i\}$ of other state variable $\{x_i\}$ on the basis of the coupling coefficient $\{W_{ij}\}$. Here, the determination is made on the basis of the expression (6). Furthermore, for example, in a case where the value of the state variable $x_j$ is changed, the state update unit 112 calculates an energy value with respect to a current state by integrating the current energy value with the change value $\Delta E_j$. The state update unit 112 sequentially changes the state variable $x_j$ that is the change candidate at a certain temperature value T and repeats to update the state variable, the local field, and the energy value a predetermined number of times (or predetermined period). When the temperature value T is lowered by the control circuit 13, the state update unit 112 further repeats to update the state variable, the local field, and the energy value at the lowered temperature.
The score update unit 113 updates a score value S according to the energy value E(x) and the temperature value T (or inverse temperature value $\beta = 1/T$) with respect to the value of the plurality of state variables ($x_1$ to $x_N$). The score value S is obtained by the expression (8).
The selection circuit 12 acquires a plurality of score values (score values $S^1$ to $S^K$) respectively from the plurality of update circuits (update circuits 11a1 to 11aK). The selection circuit 12 selects a set of the plurality of state variables held by the predetermined number L (L is integer equal to or more than one and less than K) of update circuits less than the number K of the plurality of update circuits on the basis of the score values $S^1$ to $S^K$ respectively corresponding to the update circuit 11a1 to 11aK. The set of the values of the plurality of state variables corresponds to the plurality of state vectors (L state vectors). The state vector selected by the selection circuit 12 is expressed as $\{x^S\}$. The selection circuit 12 outputs the selected set of the values of the plurality of state variables.
The control circuit 13 controls operations of the update circuits 11a1 to 11aK, the selection circuit 12, and the memory control circuit 14. For example, the control circuit 13 sets the initial values, bias values, or the like of the state, the local field, and the temperature value (or inverse temperature value), and the score value with respect to the update circuits 11a1 to 11aK. Furthermore, for example, the control circuit 13 supplies clocks to the update circuits 11a1 to 11aK and the selection circuit 12. Note that the temperature value may be updated on the basis of the expression (9) by the control circuit 13 or the state update unit of each update circuit. For example, the control circuit 13 sets the temperature values for the update circuits 11a1 to 11aK. The control circuit 13 gradually decreases the temperature value to be set (also can be said as "gradually increase inverse temperature value").
The control circuit 13 controls reading of the coupling coefficient $\{W_{ij}\}$ corresponding to the state variable $x_j$ that is the change candidate from the external memory 50 by the memory control circuit 14 and writing of the coupling coefficient $\{W_{ij}\}$ to the storage unit of each of the update circuits 11a1 to 11aK. For example, a coupling coefficient W is stored in the external memory 50 in advance in an order of the index selected as the change candidate. The control circuit 13 outputs a command to read the coupling coefficient $\{W_{ij}\}$ from the external memory 50 and to write the coupling coefficient $\{W_{ij}\}$ to the storage units of the update circuits 11a1 to 11aK according to an increment of the index j of the change candidate to the memory control circuit 14.

In response to the command from the control circuit 13, the memory control circuit 14 reads the coupling coefficient $\{W_{ij}\}$ (= $W_{ij}$, $W_{2j}$,..., and $W_{Nj}$) between the state variable that is the change candidate and the other state variable from the external memory 50 in order (in order of selection of index j of change candidate). The memory control circuit 14 stores the read coupling coefficient $\{W_{ij}\}$ (= $W_{ij}$, $W_{2j}$,..., and $W_{Nj}$) to the storage unit included in each of the update circuits 11a1 to 11aK.

Here, in a case where the AIS is used, for example, the selection circuit 12 selects L state vectors $\{x^S\}$ at the time when the temperature value (or inverse temperature value) reaches a target value and outputs the state vector $\{x^S\}$ as a sampled state. As a method for selecting the state vector by the selection circuit 12, a method is considered for selecting top L score values $S^k$. For example, the selection circuit 12 (or control circuit 13) may write the state vector $\{x^S\}$ output by the selection circuit 12 to the external memory 50 or other memory.

Furthermore, it is considered to calculate and output an average value of state functions to be observed with respect to the L state vectors $\{x^S\}$ selected by the selection circuit 12 on the basis of the score value S. In this case, the sampling device 10 may further include an average value calculation circuit that calculates an average value of a predetermined state function on the basis of the predetermined number of score values corresponding to the predetermined number of update circuits. For example, when a state function relative to the replica k is assumed as $A_p^k$, an average value <A> is expressed by the expression (10).

[Formula 10]

$$\langle A \rangle = \frac{\sum_k A_p^k S_p^k}{\sum_k S_p^k} \tag{10}$$

Furthermore, in a case where the PA is used, for example, the selection circuit 12 performs a step called resampling on the basis of the score value $S_p^k$ after calculating the score value $S_p^k$ at the timing according to a time step p (for example, p = 0 (mod M) (M is integer equal to or more than one). Here, "p = 0 (mod M)" indicates that a remainder obtained by dividing p by M is zero. In the resampling step, the selection circuit 12 selects the state of the replica k depending on the probability indicated in the expression (11) and takes the selected state over search in the next time step.

[Formula 11]

$$P^k = \frac{S_p^k}{\sum_k S_p^k} \tag{11}$$

In this case, by performing K/m times of selection with the probability in the expression (11) with respect to m ($2 \leq m < K$) that is a divisor of K, the selection circuit 12 selects a state to be taken over among the states held by the update circuits 11a1 to 11aK while allowing overlap. By storing the selected state in the storage unit of each of the update circuits 11a1 to 11aK, the selection circuit 12 updates the state of each replica to a state to be taken over. The energy value and the value of the local field held in the storage unit are updated to values corresponding to the state to be taken over by each update circuit or the selection circuit 12. For example, the selection circuit 12 reads the state vector and the values of the energy value and each local field from the storage unit of the update circuit that is a takeover source and stores the read values in the storage unit of the update circuit that is a takeover destination. When resampling is completed, the selection circuit 12 resets the score values $S_p^k$ of all the replicas to one. Then, the search by the update circuits 11a1 to 11aK is restarted.

In a case of the PA, for example, the selection circuit 12 selects the L state vectors $\{x^S\}$ (may be L = m may) at the probability indicated in the expression (11) at the time when the temperature value (or inverse temperature value) reaches the target value and outputs the state vector $\{x^S\}$ as the sampled sate. Furthermore, as in a case of using the AIS, the sampling device 10 may include the average value calculation circuit that calculates and outputs the average value of the state functions to be observed with respect to the L state vectors $\{x^S\}$ selected by the selection circuit 12 on the basis of the score value S according to the expression (10).

Moreover, for example, the control circuit 13 may output values of the plurality of state variables corresponding to the lowest energy value among the values of the plurality of state variables obtained by each of the update circuits 11a1 to 11aK at the time when the temperature value (or inverse temperature value) reaches the target value. As an example, the control circuit 13 may output the values of the plurality of state variables corresponding to the lowest energy among the states selected by the selection circuit 12 at the time when the temperature value reaches the target value as a solution to the combination optimization problem.

In the sampling device 10, it is sufficient that the storage unit included in each of the update circuits 11a1 to 11aK hold at least the coupling coefficient $\{W_{ij}\}$ corresponding to the index j of the change candidate at this time among all the coupling coefficients. For example, the storage unit may hold only the coupling coefficient $\{W_{ij}\}$ corresponding to the index j of the change candidate at this time among all the coupling coefficients.

Then, a capacity requested for holding the coupling coefficient in the storage unit of each of the update circuits 11a1 to 11aK is suppressed to a size of N (however, N - 1, when excluding index j) coupling coefficients at the minimum. Therefore, in comparison with a case where $N^2$ coupling coefficients are held in the limited capacity of the storage unit of each of the update circuits 11a1 to 11aK, more state variables can be used without changing the number of bits of the coupling coefficient (without deteriorating precision of problem expression). In this way, according to the sampling device 10, limitation in the number of the state variables that can be used (problem scale) can be improved. Furthermore, by performing sampling by using the update circuits 11a1 to 11aK in parallel, the sampling can be accelerated.

Hereinafter, an exemplary configuration of a sampling device in a case where the AIS and the PA described above are used will be described more specifically. First, a case where the PA is used is exemplified.

[Second Embodiment]

Next, a second embodiment will be described.

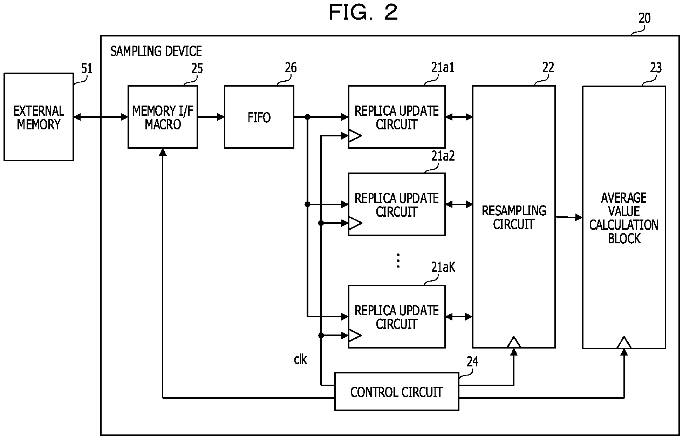

FIG. 2 is a diagram illustrating an exemplary circuit configuration of a sampling device according to the second embodiment. A sampling device 20 includes replica update circuits 21a1, 21a2,..., and 21aK, a resampling circuit 22, an average value calculation block 23, a control circuit 24, a memory InterFace (I/F) macro 25, and a First In, First Out (FIFO) 26. The sampling device 20 is connected to an external memory 51. The sampling device 20 is implemented by using a semiconductor integrated circuit, for example, a FPGA or the like.

The external memory 51 is, for example, a DRAM. The external memory 51 stores coupling coefficients for all the sets of two state variables included in the Ising model. For example, the external memory 51 stores all the coupling coefficients W in advance in an order corresponding to an order of occurrence of the index j of the change candidate. When the number of state variables is N, the number of the state variables stored in the external memory 51 is $N^2$.

Each of the replica update circuits 21a1 to 21aK holds a state of a replica (state vector) and an energy value according to the state in an internal memory included in each of the replica update circuits 21a1 to 21aK. K replicas are implemented by the replica update circuits 21a1 to 21aK. Furthermore, each of the replica update circuits 21a1 to 21aK holds a local field corresponding to the state variable belonging to the state vector in the internal memory. Moreover, each of the replica update circuits 21a1 to 21aK holds a coupling coefficient $\{W_{ij}\}$ with respect to the index j of the change candidate in the internal memory. The replica update circuits 21a1 to 21aK update the states of the plurality of replicas in parallel. A single index j of the change candidate that is generated once is common to the replica update circuits 21a1 to 21aK.

The replica update circuits 21a1 to 21aK are examples of the respective update circuits 11a1 to 11aK according to the first embodiment. Each of the replica update circuits 21a1 to 21aK may be referred to as an arithmetic circuit that performs an operation regarding the replica.

The resampling circuit 22 performs resampling on the basis of a plurality of score value $S_p^k$ (may be simply referred to as score) updated by the replica update circuits 21a1 to 21aK. The resampling circuit 22 outputs the state vector held by the replica update circuit selected by resampling from among the replica update circuits 21a1 to 21aK to the replica update circuits 21a1 to 21aK.

The average value calculation block 23 is a circuit that calculates an average value of a state function by the expression (11) or the like by using the score $S_p^k$ of the replica update circuit selected by the resampling circuit 22.

The control circuit 24 supplies clock signals (clk) to the replica update circuits 21a1 to 21aK, the resampling circuit 22, and the average value calculation block 23 and controls operations of the replica update circuits 21a1 to 21aK, the resampling circuit 22, and the average value calculation block 23. The control circuit 24 controls a timing at which the coupling coefficient $\{W_{ij}\}$ is read from the external memory 51 by the memory I/F macro 25. The control circuit 24 outputs a request to read the coupling coefficient $\{W_{ij}\}$ from the external memory 51 to the memory I/F macro 25. The control circuit 24 is an example of the control circuit 13 according to the first embodiment.

The memory I/F macro 25 issues a memory control signal to the external memory 51 in response to the request received from the control circuit 24. The memory control signal includes a command for reading the coupling coefficient $\{W_{ij}\}$. The memory I/F macro 25 receives data of the coupling coefficient $\{W_{ij}\}$ from the external memory 51 in response to the memory control signal.

The memory I/F macro 25 has a FIFO function for synchronizing and rearranging data from the external memory 51 or the like. The memory I/F macro 25 outputs the received data of the coupling coefficient $\{W_{ij}\}$ to the FIFO 26. Furthermore, the memory I/F macro 25 outputs a FIFO control signal used to synchronize data transmission to the replica update circuits 21a1 to 21aK to the FIFO 26.

The FIFO 26 receives the data of the coupling coefficient $\{W_{ij}\}$ from the memory I/F macro 25. The FIFO 26 outputs the data of the coupling coefficient $\{W_{ij}\}$ to the internal memory (illustration is omitted) of the replica update circuits 21a1 to 21aK on the basis of the FIFO control signal from the memory I/F macro 25.

A set of the memory I/F macro 25 and the FIFO 26 are an example of the memory control circuit 14 according to the first embodiment.

Next, a circuit configuration of the replica update circuit 21a1 will be exemplified. The replica update circuits 21a2 to 21aK have circuit configurations similar to that of the replica update circuit 21a1.

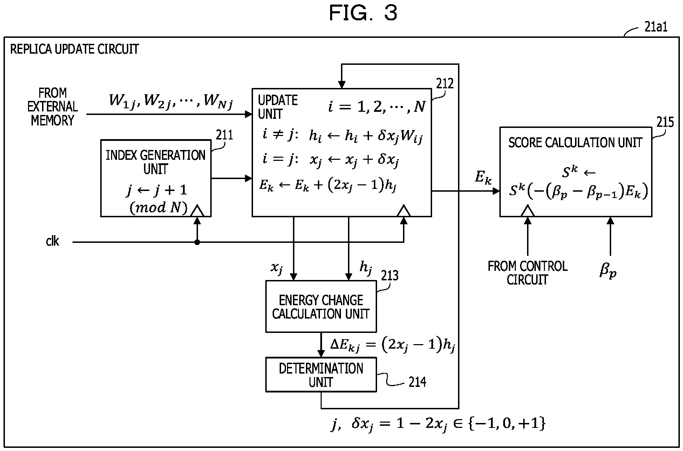

FIG. 3 is a diagram illustrating an exemplary circuit configuration of the replica update circuit.

The replica update circuit 21a1 includes an index generation unit 211, an update unit 212, an energy change calculation unit 213, a determination unit 214, and a score calculation unit 215. A set of the index generation unit 211, the update unit 212, the energy change calculation unit 213, and the determination unit 214 is an example of the state update unit 112 (or state update circuit) according to the first embodiment. For example, a circuit block including the index generation unit 211, the update unit 212, the energy change calculation unit 213, and the determination unit 214 may be referred to as a state update unit or a state update circuit. The score calculation unit 215 is an example of the score update unit 113 (or score update circuit) according to the first embodiment.

The index generation unit 211 generates an index j of a change candidate in synchronization with the clock signal supplied from the control circuit 24 and supplies the index j to the update unit 212. For example, the index generation unit 211 sets a next index of the change candidate to j + 1 with respect to the index j of the change candidate at this time. Since the total number of state variables is N, indices are generated one by one in an order of j = 1 to N. When the index reaches j = N, the index is generated from j = 1. In this way, the index generation unit 211 sequentially generates the index j of the state variable that is the change candidate. It can be said that the index generation unit 211 selects a next state variable that is a change candidate. In this way, the replica update circuit 21a1 can control the generation order of the indices of the state variable that is the change candidate.

The update unit 212 holds the coupling coefficient $\{W_{ij}\}$ = $W_{ij}$, $W_{2j}$,..., and $W_{Nj}$ read from the external memory 51. The update unit 212 outputs a value of a state variable $x_j$ that is the change candidate and a value of a local field $h_j$ corresponding to the state variable $x_j$ to the energy change calculation unit 213 in synchronization with the clock signal supplied from the control circuit 24.

The energy change calculation unit 213 calculates a change value $\Delta E_{kj}$ of the energy value in the Ising model on the basis of the value of the state variable $x_j$ and the value of the local field $h_j$. A subscript k for the energy value indicates a replica. The change value $\Delta E_{kj}$ is calculated on the basis of the expression (2), and $\Delta E_{kj} = -\delta x_j h_j = (2x_j - 1) h_j$ is satisfied. The energy change calculation unit 213 outputs the calculated change value $\Delta E_{kj}$ to the determination unit 214.

The determination unit 214 determines whether or not a change in the value of the state variable $x_j$ is accepted on the basis of the change value $\Delta E_{kj}$, the inverse temperature value $\beta_p$, and the random value u. The determination is made on the basis of the expression (6). The determination unit 214 outputs the index j of the change candidate and the change $\delta x_j$ of the state variable $x_j$ to the update unit 212. Here, in a case where the change in the value of the state variable $x_j$ is accepted, $\delta x_j = 1 - 2x_j$ is satisfied, and $\delta x_j = -1$ or $\delta x_j = +1$ is satisfied. In a case where the change in the value of the state variable $x_j$ is not accepted, $\delta x_j = 0$ is satisfied.

The update unit 212 updates the state of the replica on the basis of the change $\delta x_j$ output by the determination unit 214. The update unit 212 updates the local field $h_i$ to $h_i = h_i + \delta x_j W_{ij}$ on the basis of the expression (4), regarding an index $i \neq j$. In a case of $\delta x_j = 0$ (in a case where $x_j$ is not inverted), the local fields $h_i$ before and after the update are the same.

Furthermore, the update unit 212 updates the state variable $x_j$ to $x_j = x_j + \delta x_j$ regarding the index i = j. In a case of $\delta x_j = 0$ (in a case where $x_j$ is not inverted), the state variables $x_j$ before and after the update are the same. Moreover, in a case of $\delta x_j \neq 0$, the update unit 212 updates the energy value $E_k = E(x_p{}^k)$ to $E_k = E_k + \Delta E_{kj} = E_k + (2x_j - 1) h_j$. In a case of $\delta x_j = 0$, the energy value $E_k$ does not change.

The score calculation unit 215 acquires the energy value $E_k$ from the update unit 212 in synchronization with the clock signal supplied from the control circuit 24 (for example, once for one cycle of processing on j = 1 to N by update unit 212) and updates the score $S^k$. $S^k = S^k (- (\beta_p - \beta_p - 1) E_k)$ is given by the expression (8). According to the expression (8), as the energy value $E_k$ is lower, the score $S^k$ tends to be larger. Note that the score calculation unit 215 holds the score $S_{p-1}{}^k$ in the internal memory (illustration is omitted) of the score calculation unit 215. Furthermore, the score calculation unit 215 calculates $\beta_p - 1$ from $\beta_p$ on the basis of $\alpha$ or holds $\beta_p - 1$ in the internal memory.

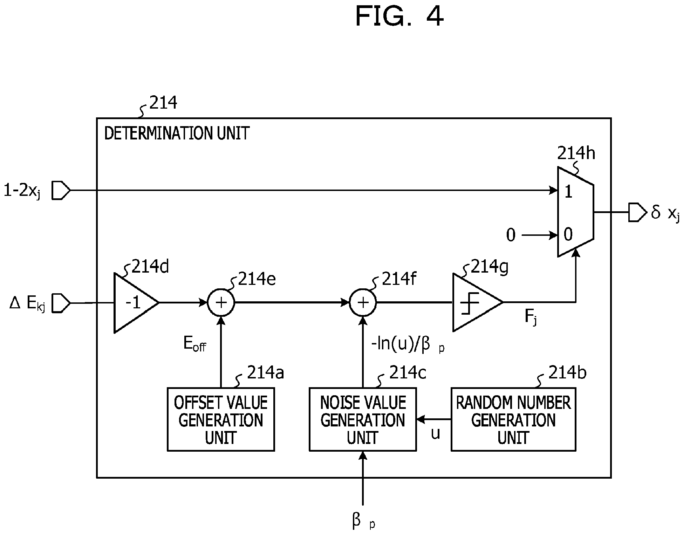

FIG. 4 is a diagram illustrating an exemplary circuit configuration of a determination unit.

The determination unit 214 includes an offset value generation unit 214a, a random number generation unit 214b, a noise value generation unit 214c, a sign inversion circuit 214d, adders 214e and 214f, a comparator 214g, and a selector 214h.

The offset value generation unit 214a generates an offset value $E_{off}$ ($E_{off} \geq 0$) on the basis of a flag $F_j$ output by the comparator 214g and supplies the generated value to the adder 214e. For example, in a case where the flag $F_j$ output from the comparator 214g indicates that transition is possible ($F_j = 1$), the offset value generation unit 214a resets the offset value $E_{off}$ to zero. In a case where the flag $F_j$ output from the comparator 214g indicates that the transition is not possible ($F_j = 0$), the offset value generation unit 214a adds an increment $\Delta E_{off}$ to the offset value $E_{off}$. In a case where the flag $F_j$ continuously indicates zero, the offset value generation unit 214a increases the offset value $E_{off}$ by the increment $\Delta E_{off}$ by integrating the increment $\Delta E_{off}$.

The random number generation unit 214b generates a uniform random number u that is $0 < u \leq 1$ and outputs the generated number to the noise value generation unit 214c.

The noise value generation unit 214c holds a conversion table used to generate a value on the left side of the expression (6) with respect to the uniform random number u and the inverse temperature value $\beta_p$ supplied from the control circuit 24. The noise value generation unit 214c generates a value of $- \ln(u)/\beta_p$ that is a noise value (thermal noise) based of the expression (6) according to the conversion table. The noise value generation unit 214c outputs the generated value of $- \ln(u)/\beta_p$ to the adder 214f.

The sign inversion circuit 214d inverts the sign of the change value $\Delta E_{kj}$ of the energy value supplied from the energy change calculation unit 213 and supplies the inverted sign to the adder 214e.

The adder 214e adds the offset value $E_{off}$ to $- \Delta E_{kj}$ supplied from the sign inversion circuit 214d and supplies the added value to the adder 214f.

The adder 214f adds the thermal noise $- \ln(u)/\beta_p$ to $- \Delta E_{kj} + E_{off}$ supplied from the adder 214e and supplies the obtained value to the comparator 214g.

The comparator 214g makes the determination on the basis of the expression (6) by comparing the evaluation value $- \Delta E_{kj} + E_{off} - \ln(u)/\beta_p$ output by the adder 214e with a threshold (specifically, zero). In a case where the evaluation value is equal to or more than zero, the comparator 214g outputs the flag ($F_j = 1$) indicating that the transition is possible to the selector 214h and the offset value generation unit 214a. In FIG. 4, illustration of an association line between the comparator 214g and the offset value generation unit 214a is omitted. In a case where the evaluation value is less than zero, the comparator 214g outputs the flag ($F_j = 0$) indicating that the transition is not possible to the selector 214h and the offset value generation unit 214a.

In a case where the flag output from the comparator 214g is $F_j = 1$, the selector 214h outputs $\delta x_j = 1 - 2x_j$ to the update unit 212. Furthermore, in a case where the flag output from the comparator 214g is $F_j = 0$, the selector 214h outputs $\delta x_j = 0$ to the update unit 212.

Here, in a case where the flag $F_j$ output from the comparator 214g indicates that the transition is not possible, it is considered that a current state is a local solution. By adding $E_{off}$ to $- \Delta E_{kj}$ and gradually increasing $E_{off}$ by the offset value generation unit 214a, the state transition is easily allowed. In a case where the current state is the local solution, escape from the local solution is facilitated.

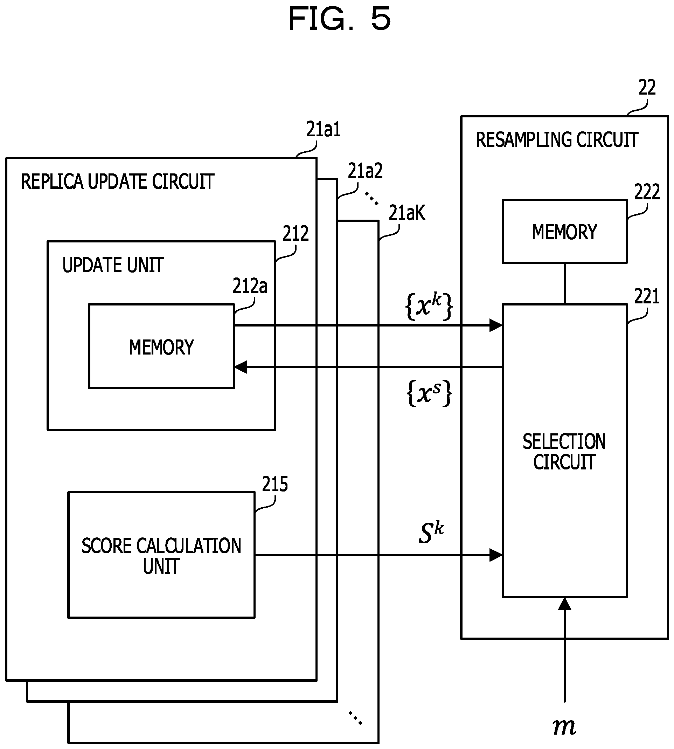

FIG. 5 is a diagram illustrating an exemplary circuit configuration of a resampling circuit.

The resampling circuit 22 includes a selection circuit 221 and a memory 222.

The selection circuit 221 acquires the score $S^k$ calculated by the score calculation unit of each of the replica update circuits 21a1 to 21aK at a timing of $p = 0$ (mod M) and performs resampling on the basis of a probability $P^k$ indicated by the expression (11). The selection circuit 221 is an example of the selection circuit 12 according to the first embodiment.

It is considered that the selection circuit 221 performs calculation for taking over the state to the next step with the probability $P^k$ indicated by the expression (11) according to a calculation expression. However, in this case, a weight of an exponential function is calculated, and weight normalization calculation is performed. There is a case where this calculation needs a large calculation amount.

Therefore, the selection circuit 221 may accelerate the resampling, for example, by using a method called Reservoir sampling. In this method, a variable log ($- \log (r_i)$) (log indicates natural logarithm) generated from probability variables ri (i = 1,..., and K) that are uniformly distributed within [0-1] to a value of energy that appears in the expression of the score $S_p^k$ as an offset, and m values from the smaller value after addition are selected. Here, as described above, m indicates a divisor of the number of replicas K (however, $2 \leq m < K$). By performing K/m times of selection, a replica that is taken over to the next step is determined. In an example, when K = 1024, m = 32.

The document 4 can be referred regarding Reservoir sampling.

Document 4: Pavlos S. Efraimidis, Paul G. Spirakis, "Weighted random sampling with a reservoir" Information Processing Letters, 97, issue 5, p.181-185., 2006

The number of selections m per time is, for example, specified to the selection circuit 221 from outside of the control circuit 24 or the sampling device 20. The selection circuit 221 acquires the state vectors $\{x^k\}$ held by the m selected replicas and stores the state vector in the memory 222. When K/m times of selection is completed, the selection circuit 221 writes the K state vectors $\{x^S\}$ accumulated in the memory 222 back to the replica update circuits 21a1 to 21aK. In each of K/m times of selection, there is a case where the selected state vectors are overlapped.

With this operation, the state vector held by the internal memory (for example, memory 212a of update unit 212) of each of the replica update circuits 21a1 to 21aK is updated to the state vector $\{x^S\}$ selected on the basis of the score $S^k$. Here, the memory 212a is, for example, a SRAM and is an example of the storage unit 111 according to the first embodiment.

Note that the selection circuit 221 acquires the energy value corresponding to the updated state vector and the value of the local field corresponding to each state variable from the replica update circuit that is the takeover source and stores the acquired values in the internal memory of the replica update circuit that is the takeover destination so as to update the energy value and the value of the local field. However, the energy value corresponding to the updated state vector and the value of the local field may be updated, for example, by the update unit of each replica update circuit (for example, update unit 212).

When the resampling is completed in this way, the score $S^k$ held by the score calculation unit 215 of each of the replica update circuits 21a1 to 21aK is reset to one.

The memory 222 is, for example, a SRAM and is a storage unit that accumulates the state vector selected by the selection circuit 221.

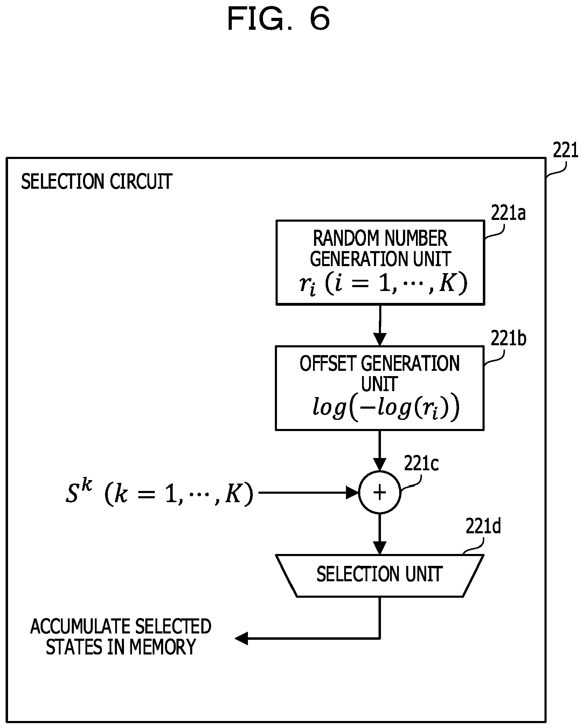

FIG. 6 is a diagram illustrating an exemplary circuit configuration of a selection circuit.

The selection circuit 221 includes a random number generation unit 221a, an offset generation unit 221b, an adder 221c, and a selection unit 221d.

The random number generation unit 221a generates K random numbers $r_i$ (i = 1,..., and K). The random number generation unit 221a outputs the K random numbers ri to the offset generation unit 221b.

The offset generation unit 221b includes a conversion table used to generate log (- log ($r_i$)) with respect to the random number $r_i$ and outputs K variables log (- log ($r_i$)) with respect to the K random numbers ri to the adder 221c on the basis of the table.

The adder 221c adds the variable log (- log ($r_i$)) supplied from the offset generation unit 221b to the score $S^k$ supplied from each of the replica update circuits 21a1 to 21aK and outputs the result to the selection unit 221d. The adder 221c associates the K scores $S^k$ and the K variables log (- log ($r_i$)) on the one-to-one basis, and a total value of the score and the variable is calculated (K total values are obtained in total).

The selection unit 221d selects the replica update circuits corresponding to the lower m values from among the K total values output from the adder 221c and accumulates the state vector held by each of the m replica update circuits in the memory 222. The selection unit 221d performs K/ m times of selection in which overlap is allowed so as to accumulate the K states in the memory 222 in total. The selection circuit 221 outputs the K states accumulated in the memory 222 to the respective replica update circuits 21a1 to 21aK and updates the states held by the replica update circuits 21a1 to 21aK.

In the resampling, there is a high possibility that a state in which energy is relatively low is taken over to next search. By repeating the resampling, it is possible to generate an appropriate sample at each temperature.

Next, a processing procedure of the sampling device 20 will be described.

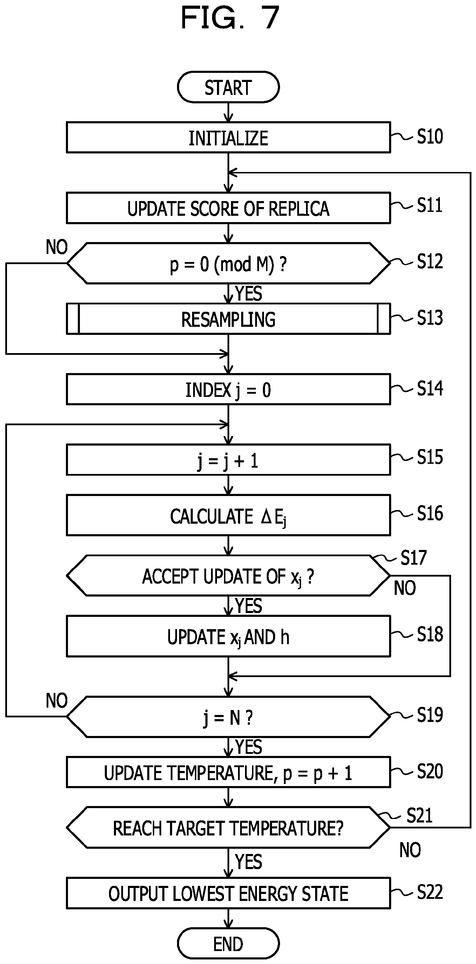

FIG. 7 is a flowchart illustrating a processing example of a sampling device.

(S10) The control circuit 24 performs initialization according to the Ising model. For example, the control circuit 24 sets an initial state, an initial value of the local field, an initial temperature value (or initial inverse temperature value), a coefficient $\alpha$ used to change a temperature value (or inverse temperature value), a bias value, and an initial energy value to each of the replica update circuits 21a1 to 21aK. The control circuit 24 sets a counter p that counts the number of times of temperature update to one. The control circuit 24 receives the number m of the states selected by resampling from outside and sets the number m to the selection circuit 221. Furthermore, the control circuit 24 receives setting of the number of times of temperature update M until resampling is performed from the outside.

Here, in the following steps S11 to S19, the replica update circuit 21a1 (k = 1) is focused and described. However, the replica update circuits 21a2 to 21aK execute similar processing in parallel.

(S11) The score calculation unit 215 updates the score $S_p^k$. The score $S_p^k$ is updated on the basis of the expression (8). Note that, after the initialization in step S10, when step S11 is performed first, the score calculation unit 215 calculates a score $S_1^k$, for example, as assuming that $\beta_0 = 0$ and $S_0^k = 1$.

(S12) The control circuit 24 determines whether or not p = 0 (mod M). In a case of p = 0 (mod M), the processing proceeds to step S13. In a case of p ≠ 0 (mod M), the processing proceeds to step S14.

(S13) The selection circuit 221 performs resampling. A procedure of resampling will be described in detail later.

(S14) The index generation unit 211 sets the index j to j = 0.

(S15) The index generation unit 211 increments the index j (j = j + 1). The update unit 212 receives the coupling coefficients $\{W_{ij}\} = W_{1j}$ to $W_{Nj}$ read from the external memory 51 and stores the coupling coefficients in the memory 212a. The update unit 212 outputs the value of the state variable $x_j$ and the value of the local field $h_j$ to the energy change calculation unit 213.

(S16) The energy change calculation unit 213 calculates the change value $\Delta E_j$ of the energy value on the basis of the value of the state variable $x_j$ and the value of the local field $h_j$. $\Delta E_j$ is calculated on the basis of the expression (2).

The energy change calculation unit 213 outputs the calculated $\Delta E_j$ to the determination unit 214.

(S17) The determination unit 214 determines whether or not the update (bit flip) of the state variable $x_j$ is accepted. In a case where the update is accepted, the processing proceeds to step S18. In a case where the update is not accepted, the processing proceeds to step S19.

(S18) Regarding the index i (i ≠ j), the update unit 212 updates the local field $h_i$ held by the memory 212a on the basis of the coupling coefficient $W_{ij}$ held by the memory 212a. The update unit 212 changes (bit flip) the value of the state variable $x_j$ in a state of being stored in the memory 212a. Moreover, the update unit 212 updates an energy value E stored in the memory 212a.

(S19) The index generation unit 211 determines whether or not j = N. In a case of j = N, the processing proceeds to step S20. In a case of j ≠ N, the processing proceeds to step S15.

(S20) The control circuit 24 updates the temperature values (or inverse temperature value) supplied to the replica update circuits 21a1 to 21aK (temperature update). The temperature update is performed on the basis of the expression (9). The control circuit 24 increments p (p = p + 1).

(S21) The control circuit 24 determines whether or not the temperature value reaches a target temperature. In a case where the temperature value reaches the target temperature, the processing proceeds to step S22. In a case where the temperature value does not reach the target temperature, the processing proceeds to step S11. Note that the control circuit 24 may determine whether or not the inverse temperature value reaches a target inverse temperature and perform control to proceed the processing to step S22 in a case where the inverse temperature value reaches the target inverse temperature and proceed the processing to step S11 in a case where the inverse temperature value does not reach the target inverse temperature.

(S22) The control circuit 24 acquires a state with the lowest energy among the states held by the replica update circuits 21a1 to 21aK and outputs the acquired state with the lowest energy. Then, the processing ends.

Note that, in step S22, the control circuit 24 may output the state selected by the resampling circuit 22 (for example, m states) and an average value of a predetermined state function calculated by the average value calculation block 23 by using the score corresponding to the selected state.

Furthermore, instead of the method for selecting the indexes in a predetermined order in step S15, it is considered to select an index of move (for example, select and add index to pair of two state variables). In this case, the update unit 212 determines a next state variable that is a change candidate by selecting the index of move in the predetermined order.

Next, a procedure of resampling will be described.

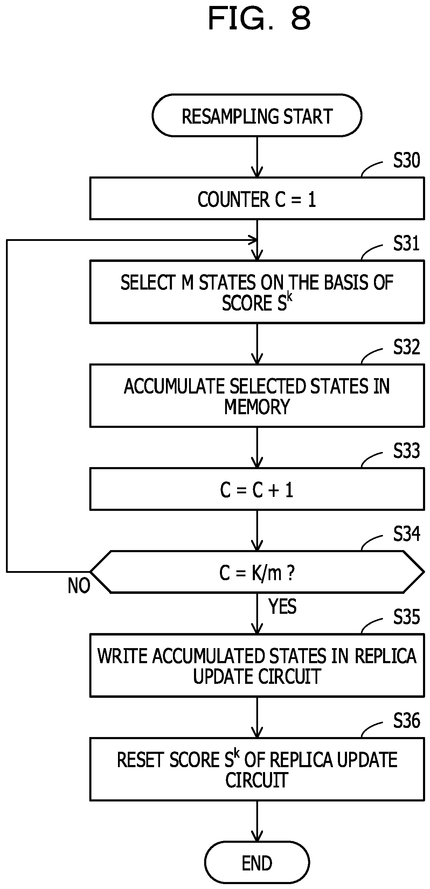

FIG. 8 is a flowchart illustrating an example of resampling.

The processing of resampling corresponds to step S13.

(S30) The selection circuit 221 sets a counter C to C = 1.

(S31) The selection circuit 221 acquires the score $S^k$ from each of the replica update circuits 21a1 to 21aK. The selection circuit 221 selects m states on the basis of the score $S^k$ from among K states held by the replica update circuits 21a1 to 21aK.

(S32) The selection circuit 221 accumulates the selected states in the memory 222.

(S33) The selection circuit 221 increments the counter C (C = C + 1).

(S34) The selection circuit 221 determines whether or not C = K/m. In a case of C = K/m, the processing proceeds to step S35. In a case of C = K/m, the processing proceeds to step S31.

(S35) The selection circuit 221 writes K states accumulated in the memory 222 to the replica update circuits 21a1 to 21aK. The energy value and the value of the local field held by each replica update circuit are updated to values corresponding to the updated state (may be updated by each replica update circuit or selection circuit 221).

(S36) The selection circuit 221 resets the score $S^k$ held by the score calculation unit of each of the replica update circuits 21a1 to 21aK to one. Then, the processing of resampling ends.

In this way, according to the set of values of the plurality of state variables (set of state vectors) selected on the basis of the plurality of score values at a first temperature value, the selection circuit 221 updates the values of the plurality of state variables stored in the memory (storage unit) included in each of the replica update circuits 21a1 to 21aK. The update unit included in each of the replica update circuits 21a1 to 21aK changes the value of the state variable using values of the plurality of state variables updated by the selection circuit 221 as starting points at a second temperature value lower than the first temperature value. For example, the selection circuit 221 selects the values of the plurality of state variables held by the replica update circuit corresponding to the score value at a rate (probability $P^k$) of the score value with respect to the sum of the plurality of score values on the basis of the expression (11). In this way, by selecting the state to be taken over to the next temperature step according to the score of each replica, the state having relatively low energy according to a target distribution (Boltzmann distribution) can be appropriately generated as a sample.

In the sampling device 20, it is sufficient that the memory included in each of the replica update circuits 21a1 to 21aK hold at least the coupling coefficient $\{W_{ij}\}$ corresponding to the index j of the change candidate at this time among all the coupling coefficients. For example, the memory may hold only the coupling coefficient $\{W_{ij}\}$ corresponding

to the index j of the change candidate at this time among all the coupling coefficients.

Then, a capacity requested for holding the coupling coefficient in the memory of each of the replica update circuits 21a1 to 21aK is suppressed to a size of N (however, N - 1 in a case of excluding index j) coupling coefficients at the minimum. Therefore, in comparison with a case where $N^2$ coupling coefficients are held in the limited capacity of the built-in memory of each of the replica update circuits 21a1 to 21aK, more state variables can be used. In this way, according to the sampling device 20, limitation in the number of the state variables that can be used (problem scale) can be improved.

[Third Embodiment]

Next, a third embodiment will be described. Matters different from the above-described second embodiment will be mainly described, and description of common matters will be omitted.

In the third embodiment, an example of a sampling device using AIS will be described.

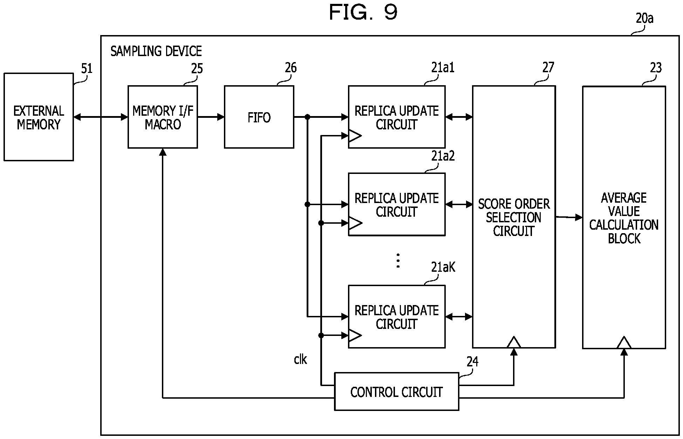

FIG. 9 is a diagram illustrating an exemplary circuit configuration of a sampling device according to the third embodiment. A sampling device 20a includes replica update circuits 21a1, 21a2,..., and 21aK, an average value calculation block 23, a control circuit 24, a memory I/F macro 25, a FIFO 26, and a score order selection circuit 27. The sampling device 20a is different from the sampling device 20 in that the score order selection circuit 27 is included instead of the resampling circuit 22. The sampling device 20a is implemented by using a semiconductor integrated circuit, for example, a FPGA or the like.

Since functions of the replica update circuits 21a1, 21a2,..., and 21aK, the average value calculation block 23, the control circuit 24, the memory I/F macro 25, and the FIFO 26 are similar to those of components having the same names in the second embodiment, description thereof will be omitted. However, the control circuit 24 controls an operation of the score order selection circuit 27 instead of the resampling circuit 22. Furthermore, the average value calculation block 23 calculates an average value of a state function by using a score corresponding to a state selected by the score order selection circuit 27.

When a temperature value (or inverse temperature value) reaches a target value, the score order selection circuit 27 acquires a score $S^k$ updated by each of the replica update circuits 21a1 to 21aK. The score order selection circuit 27 selects m states from among states held by the replica update circuits 21a1 to 21aK on the basis of the score $S^k$ and outputs the m selected states.

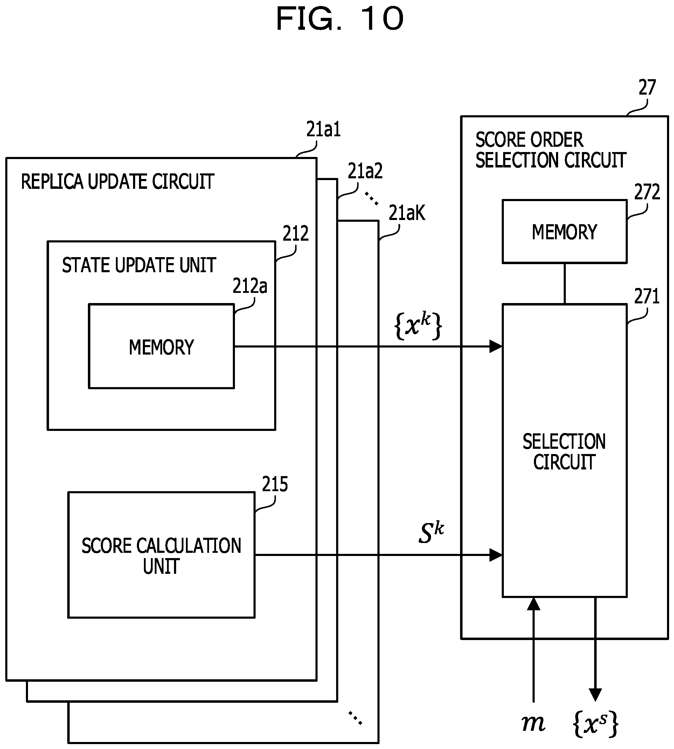

FIG. 10 is a diagram illustrating an exemplary circuit configuration of a score order selection circuit.

The score order selection circuit 27 includes a selection circuit 271 and a memory 272.

The selection circuit 271 acquires a score $S^k$ calculated by a score calculation unit of each of the replica update circuits 21a1 to 21aK. The selection circuit 271 selects m states $\{X^S\}$ corresponding to top m replicas of the score $S^k$ and stores the selected states in the memory 272. The selection circuit 271 outputs the selected m states $\{X^S\}$. The selection circuit 271 is an example of the selection circuit 12 according to the first embodiment.

The memory 272 is a storage unit that holds the state $X^S$ selected by the selection circuit 271.

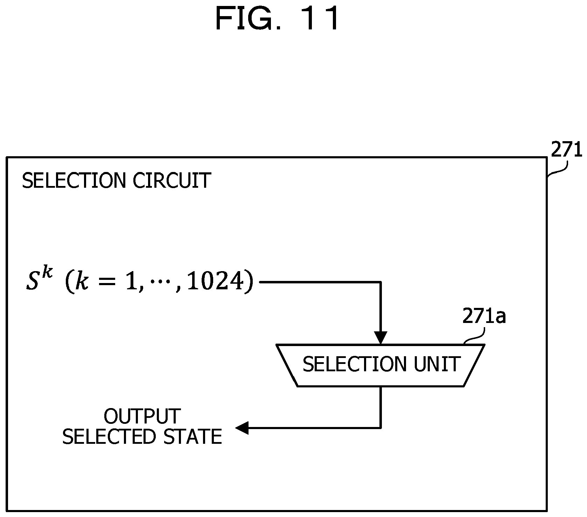

FIG. 11 is a diagram illustrating an exemplary circuit configuration of a selection circuit.

The selection circuit 271 includes a selection unit 271a.

The selection unit 271a selects replica update circuits corresponding to the top m scores among the K scores $S^k$ and outputs a state vector held by each of the m replica update circuits. An output destination may be the memory 272, an internal memory of the average value calculation block 23, or an external memory 51.

Next, a processing procedure of the sampling device 20a will be described.

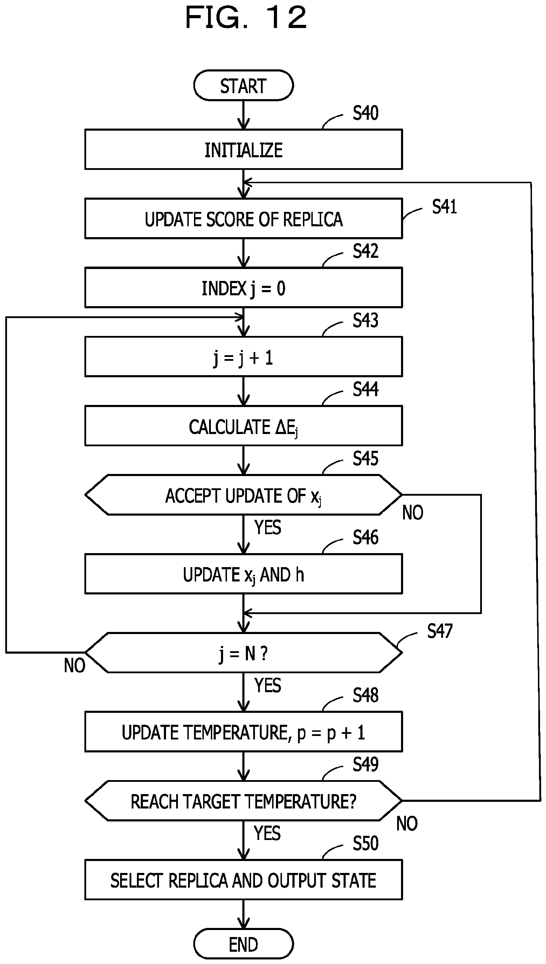

FIG. 12 is a flowchart illustrating a processing example of a sampling device.

(S40) The control circuit 24 performs initialization according to the Ising model. For example, the control circuit 24 sets an initial state, an initial value of the local field, an initial temperature value (or initial inverse temperature value), a coefficient $\alpha$ used to change a temperature value (or inverse temperature value), a bias value, and an initial energy value to each of the replica update circuits 21a1 to 21aK. The control circuit 24 sets a counter p that counts the number of times of temperature update to one. The control circuit 24 receives the number m of selected states at the time when the temperature reaches a target temperature from outside and sets the received number to the selection circuit 271.

Here, in the following steps S41 to S47, the replica update circuit 21a1 (k = 1) is focused and described. However, the replica update circuits 21a2 to 21aK execute similar processing in parallel.

(S41) The score calculation unit 215 updates a score $S_p^k$. The score $S_p^k$ is updated on the basis of the expression (8). Note that, after the initialization in step S40, when step S41 is performed first, the score calculation unit 215 calculates a score $S_1^k$, for example, as assuming that $\beta_0 = 0$ and $S_0^k = 1$.

(S42) The index generation unit 211 sets an index j to j = 0.

(S43) The index generation unit 211 increments the index j (j = j + 1). The update unit 212 receives the coupling coefficients $\{W_{ij}\} = W_{1j}$ to $W_{Nj}$ read from the external memory 51 and stores the coupling coefficients in the memory 212a. The update unit 212 outputs the value of the state variable $x_j$ and the value of the local field $h_j$ to the energy change calculation unit 213.

(S44) The energy change calculation unit 213 calculates a change value $\Delta E_j$ of an energy value on the basis of the value of the state variable $x_j$ and the value of the local field $h_j$. $\Delta E_j$ is calculated on the basis of the expression (2). The energy change calculation unit 213 outputs the calculated $\Delta E_j$ to the determination unit 214.

(S45) The determination unit 214 determines whether or not update (bit flip) of the state variable $x_j$ is accepted. In a case where the update is accepted, the processing proceeds to step S46. In a case where the update is not accepted, the processing proceeds to step S47.

(S46) Regarding the index i (i ≠ j), the update unit 212 updates the local field $h_i$ held by the memory 212a on the basis of the coupling coefficient $W_{ij}$ held by the memory 212a. The update unit 212 changes (bit flip) the value of the state variable $x_j$ in a state of being stored in the memory 212a. Moreover, the update unit 212 updates an energy value E stored in the memory 212a.

(S47) The index generation unit 211 determines whether or not j = N. In a case of j = N, the processing proceeds to step S48. In a case of j ≠ N, the processing proceeds to step S43.

(S48) The control circuit 24 updates the temperature values (or inverse temperature value) supplied to the replica update circuits 21a1 to 21aK (temperature update). The control circuit 24 increments p (p = p + 1).

(S49) The control circuit 24 determines whether or not the temperature value reaches a target temperature. In a case where the temperature value reaches the target temperature, the processing proceeds to step S50. In a case where the temperature value does not reach the target temperature, the processing proceeds to step S41. Note that the control circuit 24 may determine whether or not the inverse temperature value reaches a target inverse temperature and perform control to proceed the processing to step S50 in a case where the inverse temperature value reaches the target inverse temperature and proceed the processing to step S41 in a case where the inverse temperature value does not reach the target inverse temperature.

(S50) The selection circuit 271 of the score order selection circuit 27 acquires K scores $S^k$ updated by the replica update circuits 21a1 to 21aK. The selection circuit 271 selects replica update circuits corresponding to the top m scores among the K scores $S^k$ and outputs the m state vectors held by each of the m replica update circuits. Furthermore, for example, the selection circuit 271 outputs the top m scores $S^k$. The average value calculation block 23 calculates an average value of a state function A by the expression (10) on the basis of the m scores output by the selection circuit 271 and outputs the calculated value together with the m state vectors.

In this way, when the temperature value reaches a target value, the selection circuit 271 selects the set of values of the plurality of state variables held by a predetermined number of replica update circuits on the basis of the plurality of score values. In a case of the sampling device 20a, variation in the samples is larger than that of the sampling device 20. However, the sampling device 20a has advantages such that a circuit configuration is simplified and an overhead caused by resampling does not occur.

Note that, in step S50, the control circuit 24 may output a state vector corresponding to the lowest energy value from among the state vectors obtained by each of the replica update circuits 21a1 to 21aK. For example, the control circuit 24 may output the state vector corresponding to the lowest energy value from among the m state vectors output by the score order selection circuit 27. With this operation, the sampling device 20a can be used to solve a combination optimization problem.

In the sampling device 20a, it is sufficient that a memory included in each of the replica update circuits 21a1 to 21aK hold at least the coupling coefficient $\{W_{ij}\}$ corresponding to the index j of the change candidate at this time among all the coupling coefficients. For example, the memory may hold only the coupling coefficient $\{W_{ij}\}$ corresponding to the index j of the change candidate at this time among all the coupling coefficients.

Then, a capacity requested for holding the coupling coefficient in the memory of each of the replica update circuits 21a1 to 21aK is suppressed to a size of N (however, N - 1 in a case of excluding index j) coupling coefficients at the minimum. Therefore, in comparison with a case where $N^2$ coupling coefficients are held in the limited capacity of the built-in memory of each of the replica update circuits 21a1 to 21aK, more state variables can be used. In this way, according to the sampling device 20a, limitation in the number of the state variables that can be used (problem scale) can be improved.

[Fourth Embodiment]

Next, a fourth embodiment will be described. Matters different from the above-described second and third embodiments will be mainly described, and description of common matters will be omitted.

When a state variable $x_j$ is changed (bit flip), an updated local field hi is calculated as $h_i = h_i + \delta x_j W_{ij}$ by using a change $\delta x_j = 1 - 2x_j$. Therefore, divided local fields are divided and held in a plurality of chips and a control circuit broadcasts a value of $\delta x_j$ (any one of 0, + 1, or - 1) to each chip so that the local field can be locally updated, and the number of chips can be increased.

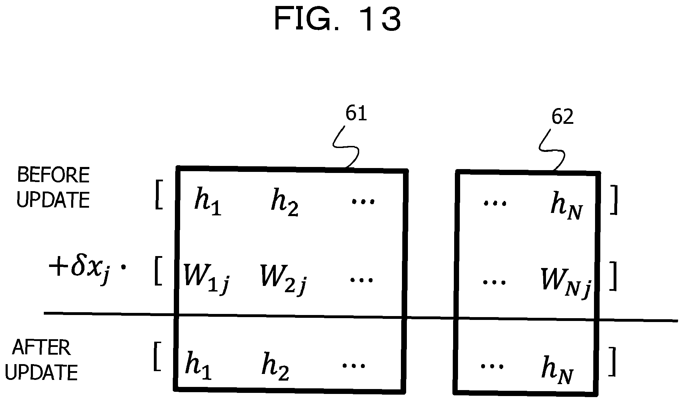

FIG. 13 is a diagram illustrating a division example of a state variable.

N state variables (and local fields corresponding to state variables) are divided into a plurality of groups (for example, groups 61 and 62), and the multiple groups are respectively mounted on different chips of the plurality of groups. An addition operation to update the local field can be performed in parallel by each of the chips.

For example, a first storage unit and a first state update unit are mounted on a first chip, and a second storage unit and a second state update unit are mounted on a second chip. In a case of the example in FIG. 13, for example, the group 61 corresponds to the first chip. The group 62 corresponds to the second chip.

The first storage unit stores a coupling coefficient with respect to a set of a state variable of a first part corresponding to the group 61 and a state variable that is a change candidate. The first state update unit updates the value of the state variable of the first part and the value of the local field corresponding to the state variable of the first part.

The second storage unit stores a coupling coefficient with respect to a set of a state variable of a second part corresponding to the group 62 and a state variable that is a change candidate. The second state update unit updates the value of the state variable of the second part and the value of the local field corresponding to the state variable of the second part.

The number of groups (for example, the number of chips) can be equal to or more than two.

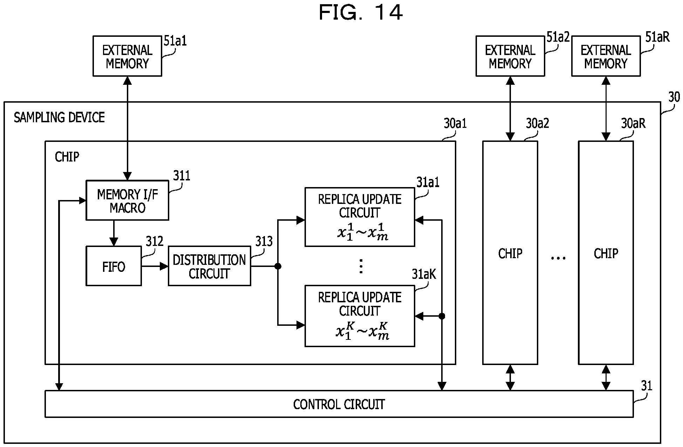

FIG. 14 is a diagram illustrating an exemplary circuit configuration of a sampling device according to the fourth embodiment.

In FIG. 14, an example is illustrated in which N state variables are divided into R (R is integer equal to or more than two) groups. The number of state variables belonging to a single group is N/R = m. In this case, one or a plurality of external memories is used. In FIG. 14, R external memories 51a1 to 51aR are illustrated. The external memories 51a1 to 51aR are, for example, DRAMs. For each of the external memories 51a1 to 51aR, the coupling coefficients divided into R groups are separately stored.

A sampling device 30 includes chips 30a1, 30a2,..., and 30aR and a control circuit 31. The chips 30a1 to 30aR are respectively connected to the external memories 51a1 to 51aR. In the following description, the chip 30a1 is focused and described. However, the chips 30a2 to 30aR have a similar configuration.

The chip 30a1 includes replica update circuits 31a1 to 31aK, a memory I/F macro 311, a FIFO 312, and a distribution circuit 313.

The replica update circuits 31a1 to 31aK are respectively responsible for updating m state variables $x_1^1$ to $x_m^1$ and m local fields $h_1^1$ to $h_m^1$. It is sufficient that each of the replica update circuits 31a1 to 31aK hold only $W_{ij}$ to $W_{mj}$ of the coupling coefficients $W_{ij} = W_{ij}$ to $W_{Nj}$ with respect to the index j of the state variable that is the change candidate in an internal memory (illustration is omitted) of each of the replica update circuits 31a1 to 31aK. In this case, for example, the external memory 51a1 holds mN coupling coefficients $W_{1i}$ to $W_{mi}$ (i = 1 to N) .

In a case where a chip other than the chip 30a1 is responsible for a state variable $x_j^k$ to be changed, a change $\delta x_j^k$ calculated by a k-th replica update circuit of the other chip is supplied to a k-th replica update circuit of the chip 30a1 via the control circuit 31. A k-th replica is implemented by R replica update circuits (k-th replica update circuit) mounted on the chips 30a1 to 30aR.

The memory I/F macro 311 reads the coupling coefficients $W_{1j}$ to $W_{mj}$ corresponding to the index j of the change candidate at this time among the coupling coefficients $W_{1i}$ to $W_{mi}$ (i = 1 to N) stored in the external memory 51a1 in response to a command from the control circuit 31 and outputs the read coupling coefficients to the FIFO 312. The memory I/F macro 311 executes processing such as synchronization and rearrangement of data output from the external memory 51a1.

The FIFO 312 outputs the coupling coefficients $W_{ij}$ to $W_{mj}$ supplied from the memory I/F macro 311 to the distribution circuit 313 in synchronization with data transmission.

The distribution circuit 313 stores the coupling coefficients $W_{1j}$ to $W_{mj}$ supplied from the FIFO 312 in the internal memories of the replica update circuits 31a1 to 31aK.

The control circuit 31 has the function of the control circuit 24 indicated in the second and the third embodiments. Furthermore, the control circuit 31 acquires $\delta x_j^k$ with respect to an index j of a replica k determined by a certain chip and transmits the acquired value to the replica update circuit of the replica k of the other chip. Moreover, the control circuit 31 merges the value of the state variable held by the replica update circuit of the replica k of each chip and creates the state vector of the replica k.

Furthermore, although not illustrated in FIG. 14, the sampling device 30 includes a score calculation circuit that calculates a score of each replica and an energy calculation circuit that calculates energy of each replica and includes a circuit corresponding to the resampling circuit 22 or the score order selection circuit 27. The score of each replica is calculated for the state vector of each replica merged by the control circuit 31.

Furthermore, the control circuit 31 controls processing for writing the state vector accompanying with resampling to the replica update circuit. For example, in a case where the state vector selected by resampling is reflected to the replica k, the control circuit 31 divides N state variables belonging to the state vector into R groups and writes the divided groups to the k-th replica update circuit of each chip. At this time, the control circuit 31 updates the local field of each state variable and the energy value of the replica.

In this way, by implementing the K replicas of the sampling device 30 by the plurality of chips (for example, chips 30a1 to 30aR), a capacity requested to hold the coupling coefficients in the internal memory (storage unit) of the single replica update circuit can be further reduced. Therefore, more state variables can be used, and limitation in the number of state variables can be improved.

By the way, an existing information processing device (for example, Japanese Patent Application Laid-Open No. 2018-41351) determines a state variable to be inverted by parallel trial on the basis of an energy increment when the state variable (bit) is inverted. Therefore, although high speed can be obtained, the bit to be inverted is generated in an unpredictable form (substantially random). Therefore, in order to update the local field according to the inverted bit, random access to the memory that holds the value of the local field is made. In order to operate the information processing device at high speed, it is needed to mount a random accessible memory on a chip and accumulate all coupling coefficients in the memory. Therefore, a problem occurs in that the number of variables that can be used (corresponding to problem size) is limited depending on this memory capacity.

On the other hand, an efficient parallelization method is requested instead of the parallel trial in order to improve the limitation in the problem size due to an on-chip memory capacity while maintaining parallelism that is the source of the high speed.

Therefore, in the sampling devices 10, 20, 20a, and 30, as the parallelization method, a method is employed for operating the stochastic search processes (replica) in parallel and integrating information of the plurality of replicas. As the method for integrating the information of the plurality of replicas, AIP or PA that is the application of the principle of Jarzynski-Neal is used.

In the sampling devices 10, 20, 20a, and 30, as indicated, trials in order of indexes are performed. The coupling coefficient is read by serial access to a memory (external memory) outside the chip. One row of the coupling coefficient is read by serial access and is used by the plurality of replicas on the chip in common, and a trial is performed. The temperature value of the replica is gradually lowered, and an output target state is selected according to a score determined on the basis of the energy and the temperature value of the replica. For example, in the sampling devices 10, 20, and 30, a state of a replica that is taken over to a next temperature value may be determined.

According to the sampling devices 10, 20, 20a, and 30, while maintaining the parallelism of the trials and performing acceleration, the limitation in the problem size due to the on-chip memory capacity can be improved.

**Claims**

1. A sampling device comprising:

   a plurality of update circuits including
   a storage unit configured to store a coupling coefficient for each set of a state variable that is a change candidate and another state variable among a plurality of state variables included in an evaluation function indicating an energy value, values of the plurality of state variables, and values of a plurality of local fields corresponding to the plurality of state variables,
   a state update unit configured to calculate a change value of the energy value on the basis of the value of the local field of the state variable that is the change candidate, change the value of the state variable according to determination whether or not the value of the state variable is changed depending on a set temperature value and random value and the change value, and update the value of the local field of the other state variable on the basis of the coupling coefficient, and
   a score update unit configured to update a score value according to the energy value with respect to the values of the plurality of state variables and the temperature value; and
   a selection circuit configured to select a set of the values of the plurality of state variables held by a predetermined number of update circuits fewer than the number of the plurality of update circuits, on the basis of the plurality of score values corresponding to the plurality of update circuits and output the selected set of the values of the plurality of state variables.

2. The sampling device according to claim 1, wherein

   the selection circuit is configured to update the values of the plurality of state variables stored in the storage unit included in each of the plurality of update circuits according to the set of the values of the plurality of state variables selected on the basis of the plurality of score values at a first temperature value, and
   the state update unit included in each of the plurality of update circuits is configured to change the value of the state variable using the values of the plurality of state variables updated by the selection circuit as starting points at a second temperature value lower than the first temperature value.

**3.** The sampling device according to claim 2, wherein
the selection circuit is configured to select the values of the plurality of state variables held by the update circuit corresponding to the score value at a rate of the score value with respect to a sum of the plurality of score values.

**4.** The sampling device according to claim 1, wherein
when the temperature value reaches a target value, the selection circuit is configured to select the set of the values of the plurality of state variables on the basis of the plurality of score values.

**5.** The sampling device according to any of claims 1 to 4, further comprising

a memory control circuit configured to read the coupling coefficient between the state variable that is the change candidate and the other state variable from a memory that stores the coupling coefficients for all the sets of two state variables from among the plurality of state variables in an order of selection of the state variables that are the change candidates and
store the read coupling coefficient in the storage unit included in each of the plurality of update circuits.

**6.** The sampling device according to any of claims 1 to 5, further comprising
an average value calculation circuit configured to calculate an average value of a predetermined state function on the basis of a predetermined number of the score values corresponding to the predetermined number of update circuits.

**7.** The sampling device according to any of claims 1 to 6, further comprising
a control circuit configured to set the temperature value to the plurality of update circuits and gradually decrease the temperature value.

**8.** The sampling device according to any of claims 1 to 7, further comprising
a control circuit configured to output values of the plurality of state variables corresponding to the lowest energy value among the plurality of state variables obtained by each of the plurality of update circuits when the temperature value reaches a target value.

**9.** The sampling device according to any of claims 1 to 8, wherein
the storage unit includes a first storage unit configured to store the coupling coefficient with respect to a set of a state variable of a first part and the state variable that is the change candidate among the plurality of state variables and a second storage unit configured to store the coupling coefficient with respect to a set of a state variable of a second part and the state variable that is the change candidate among the plurality of state variables, and

the state update unit includes a first state update unit configured to update the value of the state variable of the first part and the value of the local field corresponding to the state variable of the first part and a second state update unit configured to update the value of the state variable of the second part and the value of the local field corresponding to the state variable of the second part,
the sampling device further comprising:

a first chip including the first storage unit and the first state update unit; and
a second chip including the second storage unit and the second state update unit.

**10.** A sampling method comprising:

calculating a change value of an energy value on the basis of a value of a local field of a state variable that is a change candidate among a plurality of state variables included in an evaluation function indicating the energy value,
changing a value of the state variable according to determination whether or not the value of the state variable is changed depending on a set temperature value and random value and the change value, and
updating the value of the local field of the other state variable on the basis of a coupling coefficient for each set of the state variable that is the change candidate and the other state variable stored in a storage unit by a state update unit included in each of a plurality of update circuits;
updating a score value according to the energy value with respect to the values of the plurality of state variables and the temperature value by a score update unit included in each of the plurality of update circuits; and
selecting a set of the values of the plurality of state variables held by a predetermined number of update circuits fewer than the number of the plurality of update circuits on the basis of a plurality of the score values corresponding to the plurality of update circuits and outputting the selected set of the values of the plurality of state variables by a selection circuit.

# FIG. 1

# FIG. 2

# FIG. 3

21a1

REPLICA UPDATE CIRCUIT

FROM
EXTERNAL
MEMORY

$W_{1j}, W_{2j}, \cdots, W_{Nj}$

INDEX GENERATION
UNIT

211

$j \leftarrow j + 1$
$(mod\ N)$

clk

UPDATE
UNIT

212

$i = 1, 2, \cdots, N$

$i \neq j:\ h_i \leftarrow h_i + \delta x_j W_{ij}$

$i = j:\ x_j \leftarrow x_j + \delta x_j$

$E_k \leftarrow E_k + (2x_j - 1)h_j$

$E_k$

SCORE CALCULATION UNIT

215

$S^k \leftarrow$
$S^k(-(\beta_p - \beta_{p-1})E_k)$

FROM CONTROL
CIRCUIT

$\beta_p$

$x_j$          $h_j$          213

ENERGY CHANGE
CALCULATION UNIT

$\Delta E_{kj} = (2x_j - 1)h_j$

DETERMINATION
UNIT

214

$j,\ \ \delta x_j = 1 - 2x_j \in \{-1, 0, +1\}$

# FIG. 4

# FIG. 5

REPLICA UPDATE CIRCUIT 21a1

21a2

21aK

UPDATE UNIT 212

MEMORY 212a

SCORE CALCULATION UNIT 215

RESAMPLING CIRCUIT 22

MEMORY 222

SELECTION CIRCUIT 221

$\{x^k\}$

$\{x^s\}$

$S^k$

$m$

# FIG. 6

SELECTION CIRCUIT — 221

RANDOM NUMBER GENERATION UNIT — 221a
$$r_i \; (i = 1, \cdots, K)$$

OFFSET GENERATION UNIT — 221b
$$log(-log(r_i))$$

$$S^k \; (k = 1, \cdots, K)$$ → (+) — 221c

SELECTION UNIT — 221d

ACCUMULATE SELECTED STATES IN MEMORY

# FIG. 7

```
                    ( START )
                         │
                         ▼
        ┌──────────────────────────────────┐
        │           INITIALIZE             │～ S10
        └──────────────────────────────────┘
                         │
                         ▼ ◄──────────────────────────┐
        ┌──────────────────────────────────┐          │
        │      UPDATE SCORE OF REPLICA     │～ S11     │
        └──────────────────────────────────┘          │
                         │                             │
        NO     ╱─────────────────────────╲            │
        ◄──────┤       p = 0 (mod M) ?    ├～ S12      │
        │      ╲─────────────────────────╱            │
        │             │ YES                            │
        │             ▼                                │
        │   ┌┬──────────────────────────┬┐            │
        │   ││        RESAMPLING         ││～ S13      │
        │   └┴──────────────────────────┴┘            │
        │             │                                │
        └────────────►▼                                │
        ┌──────────────────────────────────┐          │
        │           INDEX j = 0            │～ S14     │
        └──────────────────────────────────┘          │
                         │                             │
            ┌───────────►▼                             │
            │ ┌──────────────────────────────────┐    │
            │ │           j = j + 1              │～ S15│
            │ └──────────────────────────────────┘    │
            │            │                             │
            │            ▼                             │
            │ ┌──────────────────────────────────┐    │
            │ │         CALCULATE  ΔEⱼ           │～ S16│
            │ └──────────────────────────────────┘    │
            │            │                             │
            │   ╱─────────────────────────╲  ～ S17    │
            │   ┤      ACCEPT UPDATE OF xⱼ ?├─────┐    │
            │   ╲─────────────────────────╱  NO  │    │
            │            │ YES                    │    │
            │            ▼                        │    │
            │ ┌──────────────────────────────────┐│   │
            │ │        UPDATE xⱼ AND h          │～ S18│
            │ └──────────────────────────────────┘│   │
            │            │ ◄──────────────────────┘    │
        NO  ╱────────────▼────────────╲               │
        ◄───┤          j = N ?         ├～ S19         │
        │   ╲─────────────────────────╱               │
        └───────────► │ YES                           │
        ┌──────────────────────────────────┐          │
        │  UPDATE TEMPERATURE, p = p + 1   │～ S20     │
        └──────────────────────────────────┘          │
                         │                             │
            ╱─────────────────────────╲  ～ S21        │
            ┤  REACH TARGET TEMPERATURE?├──────────────┘
            ╲─────────────────────────╱   NO
                         │ YES
                         ▼
        ┌──────────────────────────────────┐
        │     OUTPUT LOWEST ENERGY STATE   │～ S22
        └──────────────────────────────────┘
                         │
                         ▼
                     ( END )
```

# FIG. 8

```
            RESAMPLING START

                   │
                   ▼
┌──────────────────────────────────────┐  ⌐ S30
│            COUNTER C = 1              │
└──────────────────────────────────────┘
                   │
                   ▼
┌──────────────────────────────────────┐  ⌐ S31
│   SELECT M STATES ON THE BASIS OF     │
│              SCORE S^k                 │
└──────────────────────────────────────┘
                   │
                   ▼
┌──────────────────────────────────────┐  ⌐ S32
│     ACCUMULATE SELECTED STATES IN     │
│                MEMORY                  │
└──────────────────────────────────────┘
                   │
                   ▼
┌──────────────────────────────────────┐  ⌐ S33
│              C = C + 1                 │
└──────────────────────────────────────┘
                   │
                   ▼
       ◁──────────────────────────▷      ⌐ S34
  NO       C = K/m ?
       ◁──────────────────────────▷
                   │ YES
                   ▼
┌──────────────────────────────────────┐  ⌐ S35
│  WRITE ACCUMULATED STATES IN REPLICA  │
│            UPDATE CIRCUIT              │
└──────────────────────────────────────┘
                   │
                   ▼
┌──────────────────────────────────────┐  ⌐ S36
│   RESET SCORE S^k OF REPLICA UPDATE   │
│               CIRCUIT                  │
└──────────────────────────────────────┘
                   │
                   ▼
                 END
```

FIG. 9

# FIG. 10

REPLICA UPDATE CIRCUIT    21a1

21a2

21aK

STATE UPDATE UNIT    212

MEMORY    212a

SCORE CALCULATION UNIT    215

$\{x^k\}$

$S^k$

SCORE ORDER SELECTION CIRCUIT    27

MEMORY    272

SELECTION CIRCUIT    271

$m$    $\{x^s\}$

# FIG. 11

SELECTION CIRCUIT

271

$$S^k \; (k = 1, \cdots, 1024)$$

271a

SELECTION UNIT

OUTPUT
SELECTED STATE

# FIG. 12

```
        START
          │  S40
          ▼
    ┌─────────────────────┐
    │     INITIALIZE      │
    └─────────────────────┘
          │  S41
          ▼
    ┌─────────────────────┐
    │ UPDATE SCORE OF REPLICA │
    └─────────────────────┘
          │  S42
          ▼
    ┌─────────────────────┐
    │     INDEX j = 0     │
    └─────────────────────┘
          │  S43
          ▼
    ┌─────────────────────┐
    │      j = j + 1      │
    └─────────────────────┘
          │  S44
          ▼
    ┌─────────────────────┐
    │   CALCULATE ΔEⱼ     │
    └─────────────────────┘
          │  S45
          ▼
    ⟨  ACCEPT UPDATE OF xⱼ  ⟩── NO
          │ YES
          ▼  S46
    ┌─────────────────────┐
    │   UPDATE xⱼ AND h   │
    └─────────────────────┘
          │
          ▼  S47
 NO──⟨     j = N ?      ⟩
          │ YES
          ▼  S48
    ┌─────────────────────────┐
    │ UPDATE TEMPERATURE, p = p + 1 │
    └─────────────────────────┘
          │  S49
          ▼
    ⟨ REACH TARGET TEMPERATURE? ⟩── NO
          │ YES
          ▼  S50
    ┌─────────────────────────┐
    │ SELECT REPLICA AND OUTPUT STATE │
    └─────────────────────────┘
          │
          ▼
         END
```

# FIG. 13

BEFORE
UPDATE $\quad [ \; h_1 \quad h_2 \quad \cdots \qquad \cdots \quad h_N \; ]$

$+\delta x_j \cdot \quad [ \; W_{1j} \quad W_{2j} \quad \cdots \qquad \cdots \quad W_{Nj} \; ]$

AFTER
UPDATE $\quad [ \; h_1 \quad h_2 \quad \cdots \qquad \cdots \quad h_N \; ]$

# FIG. 14

Europäisches
Patentamt

European
Patent Office

Office européen
des brevets

# EUROPEAN SEARCH REPORT

Application Number

EP 20 17 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/012410 A1 (MATSUBARA SATOSHI [JP] ET AL) 10 January 2019 (2019-01-10)<br>* abstract; figures 1, 2, 14-17 *<br>* paragraph [0019] - paragraph [0040] *<br>* paragraph [0067] - paragraph [0120] * | 1-10 | INV.<br>G06N3/00<br>G06N7/00 |
| A | US 2018/300287 A1 (OKUYAMA TAKUYA [JP] ET AL) 18 October 2018 (2018-10-18)<br>* abstract; figures 1-11, 14-16 *<br>* paragraph [0001] - paragraph [0006] *<br>* paragraph [0043] - paragraph [0102] *<br>* paragraph [0116] - paragraph [0135] * | 1-10 | |
| A,D | US 2017/351949 A1 (MATSUBARA SATOSHI [JP] ET AL) 7 December 2017 (2017-12-07)<br>* abstract; figures 1, 2, 4, 5, 6 *<br>* paragraph [0003] - paragraph [0007] *<br>* paragraph [0020] - paragraph [0060] *<br>* paragraph [0074] - paragraph [0095] * | 1-10 | |
| A | YAMAOKA MASANAO ET AL: "CMOS Annealing Machine: an In-memory Computing Accelerator to Process Combinatorial Optimization Problems",<br>2019 IEEE CUSTOM INTEGRATED CIRCUITS CONFERENCE (CICC), IEEE,<br>14 April 2019 (2019-04-14), pages 1-8, XP033586942,<br>DOI: 10.1109/CICC.2019.8780296<br>[retrieved on 2019-07-29]<br>* abstract *<br>* page 1; figures 1-5 *<br>* page 1, column 1, line 1 - page 3, column 2, line 20 * | 1-10 | TECHNICAL FIELDS SEARCHED (IPC)<br><br>G06N |

-/--

The present search report has been drawn up for all claims

| Place of search | Date of completion of the search | Examiner |
|---|---|---|
| The Hague | 9 November 2020 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 20 17 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAYASHI MASATO ET AL: "An Accelerator Chip for Ground-State Searches of the Ising Model with Asynchronous Random Pulse Distribution", 2015 THIRD INTERNATIONAL SYMPOSIUM ON COMPUTING AND NETWORKING (CANDAR), IEEE, 8 December 2015 (2015-12-08), pages 542-546, XP032876258, DOI: 10.1109/CANDAR.2015.64 [retrieved on 2016-03-02] * abstract; figures 1-5 * * page 542, column 1, line 1 - column 2, line 32 * * page 543, column 1, line 32 - page 544, column 2, line 39 * ----- | 1-10 | |
| A | JP 2019 008502 A (NIPPON TELEGRAPH & TELEPHONE ET AL.) 17 January 2019 (2019-01-17) * abstract; figures 1-3 * * paragraph [0005] - paragraph [0068] * ----- | 1-10 | |

TECHNICAL FIELDS
SEARCHED (IPC)

The present search report has been drawn up for all claims

| Place of search | Date of completion of the search | Examiner |
|---|---|---|
| The Hague | 9 November 2020 | Rousset, Antoine |

EPO FORM 1503 03.82 (P04C01)

## ANNEX TO THE EUROPEAN SEARCH REPORT
## ON EUROPEAN PATENT APPLICATION NO.

EP 20 17 7455

This annex lists the patent family members relating to the patent documents cited in  the above-mentioned European search report.
The members are as contained in the European Patent Office EDP file on
The European Patent Office is in no way liable for these particulars which are merely given for the purpose of information.

09-11-2020

| Patent document cited in search report | | Publication date | Patent family member(s) | | Publication date |
|---|---|---|---|---|---|
| US 2019012410 | A1 | 10-01-2019 | JP | 2019016129 A | 31-01-2019 |
| | | | US | 2019012410 A1 | 10-01-2019 |
| US 2018300287 | A1 | 18-10-2018 | JP | 6476292 B2 | 27-02-2019 |
| | | | JP | WO2016199220 A1 | 24-05-2018 |
| | | | US | 2018300287 A1 | 18-10-2018 |
| | | | WO | 2016199220 A1 | 15-12-2016 |
| US 2017351949 | A1 | 07-12-2017 | JP | 6468247 B2 | 13-02-2019 |
| | | | JP | 2017219952 A | 14-12-2017 |
| | | | US | 2017351949 A1 | 07-12-2017 |
| JP 2019008502 | A | 17-01-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018041351 A
- JP 2016051350 A

- JP 2016051326 A

**Non-patent literature cited in the description**

- **JARZYNSKI, C.** Equilibrium Free Energies from Nonequilibrium Processes. *Acta Phys. Pol. B,* 1998, vol. 29 (6), 1609-1622
- **NEAL, R. M.** Annealed Importance Sampling. *Statistics and Computing,* 2001, vol. 11 (2), 125-139

- **K. HUKUSHIMAAND ; Y. IBA.** Population annealing and its application to a spin glass. *AIP Conference Proceedings,* 2003, vol. 690, 200-206
- **PAVLOS S. EFRAIMIDIS ; PAUL G. SPIRAKIS.** Weighted random sampling with a reservoir. *Information Processing Letters,* 2006, vol. 97 (5), 181-185